# EUROPÄISCHE PATENTSCHRIFT

(11) **EP 3 278 972 B1**
(45) Veröffentlichungstag und Bekanntmachung des Hinweises auf die Patenterteilung: **07.10.2020**
(21) Anmeldenummer: 17185153.8
(22) Anmeldetag: 07.08.2017
(51) Int. Cl.: B32B 5/04, B32B 7/12, B32B 23/06, B32B 29/00, B32B 38/12, B32B 1/02, B32B 3/06, B65D 47/00

(54) **BEHÄLTER ZUR AUFBEWAHRUNG VON LEBENSMITTELN**
CONTAINER FOR STORING FOOD
RÉCIPIENT DE STOCKAGE DE PRODUITS ALIMENTAIRES

(30) Priorität: 05.08.2016 CH 10132016
(43) Veröffentlichungstag der Anmeldung: 07.02.2018
(73) Patentinhaber: Alfabio S.r.l., 20019 Settimo Milanese (MI) (IT)
(72) Erfinder: Anderlini, Michelangelo, 20019 Settimo Milanese (IT)
(74) Vertreter: Riederer Hasler & Partner Patentanwälte AG

(56) Entgegenhaltungen:
- EP-A1- 2 586 606
- EP-A1- 2 829 396
- EP-A1- 2 862 710
- CH-A2- 700 284
- DE-A1-102008 014 758
- DE-U1-202012 102 550
- US-A1- 2012 292 226

## Beschreibung

### Gebiet der Erfindung

Die Erfindung betrifft einen Behälter zur Aufbewahrung von Lebensmitteln gemäss Oberbegriff des Anspruchs 1 und ein Verfahren zur Herstellung eines eigenstabilen Behälters gemäss Anspruch 15.

### Stand der Technik

Aus dem Stand der Technik sind Lebensmittelverpackungen bekannt, in welchen Lebensmittel besonders lange halten, da der Markt immer längere Mindesthaltbarkeiten von Lebensmitteln fordert. Dazu werden Lebensmittel unter modifizierter Atmosphäre gasdicht verpackt. Zum Schutzgasverpacken eignen sich inerte Gase wie Kohlendioxid oder Stickstoff oder deren Kombinationen. Das Schutzgas verdrängt den Luftsauerstoff aus der Verpackung. Das Verpacken unter modifizierter Atmosphäre wird auch als MAP (Modified Atmosphere Packing) bezeichnet.

MAP-Verpackungen werden typischerweise aus mehrschichtigen hitzeverformbaren Polymeren oder gespritzten Polymeren oder Aluminium hergestellt. Die Sauerstoffbarriere wird durch die Materialeigenschaften und die fehlerlose Versiegelung mit der Versiegelungsfolie erzielt. Die Versiegelung ist gasdicht und wird durch die Materialeigenschaften der zu versiegelnden Oberflächen erreicht. Mehrschichtige thermoverformte Polymerverpackungen sind nur wenig mechanisch stabil und wenig hitzestabil. Verpackte Lebensmittel können in thermoverformten Verpackungen nur beschränkt erhitzt werden. Gespritzte Polymere können mit grösseren Dicken hergestellt werden, um stabiler zu werden. Dies führt jedoch zu einem höheren Preis. Glatte Aluminiumbehälter sind weit verbreitet. Diese können auf hohe Temperaturen erhitzt werden und können gut versiegelt werden um MAP-Verpackungen zu erhalten. Aus Gesichtspunkten des Umweltschutzes und der Nachhaltigkeit sind die verwendeten Werkstoffe bedenklich, da es sich weder um biologisch abbaubare noch erneuerbare Materialien handelt.

Thermisch geformte Schalen, wie beispielsweise in der EP 2014 0177 956 offenbart, erfüllen zwar Eigenschaften wie Erhitzbarkeit, biologische Abbaubarkeit und eine gute mechanische Steifigkeit, lassen sich jedoch nicht unter modifizierter Atmosphäre verschliessen. Dies liegt daran, dass sich an den Ecken und Kanten des Behälters zwangsläufig Falten bilden, da an diesen Stellen beim Tiefziehen überschüssiges Material zusammengedrückt wird. Der Siegelrand, an dem ein Deckel zum Verschluss der Schale angebracht werden kann, weist daher ebenfalls derartige Falten auf. Trotz der Falten an dem Siegelrand lässt sich die Schale mit dem Deckel wasserdicht versiegeln. Eine gasdichte Versiegelung ist aber durch das Vorhandensein von Falten an dem Siegelrand nicht möglich. Darüber hinaus schwächen vorhandene Falten die Struktur des Materials, was dazu führt, dass das Materialgewicht erhöht werden muss, um die notwendige Steifigkeit zu erhalten.

In der EP 2 862 710 A1 ist ein muldenförmiger Verpackungsbehälter mit einem Boden und einem daran anschliessenden umlaufenden Rand offenbart. Der Verpackungsbehälter umfasst wenigstens zwei Papierlagen zwischen welchen ein Klebstoff oder ein Kunststoff vorgesehen ist. Am oberen Ende des Randes verläuft ein Siegelrand an welchem ein Deckel aufgesiegelt werden kann. Die Tiefziehfähigkeit der Lagen wird dadurch verbessert, dass wenigstens eine Papierlage durch zwei Kunststofflagen umschlossen ist und die faserhaltigen Lagen eine erhöhte Feuchtigkeit aufweisen und beim Formen lose gehalten sind. Dies ermöglicht ein Nachrutschen beim Umformen. Diese Vorkehrungen für eine verbesserte Umformbarkeit sind jedoch aufwendig. Die Lagen müssen vor der Umformung definiert befeuchtet werden. Auch können die Lagen ungewollt vor dem Umformen relativ zueinander verrutschen.

In der US 2012/0292226 A1 ist eine Lebensmittel-Schale beschrieben, welche aus wenigstens zwei Kartonlagen hergestellt ist, welche mit wasserabweisenden Schichten, bevorzugt aus Polypropylen oder Polyethylen, überzogen sind. Ziel ist es die Schale vor nassen Standflächen zu schützen. Die wasserabweisenden Schichten besitzen daher keine ausreichende Gasbarriere um die Schale schutzbegasen zu können. Ferner sind weder Polyethylen noch Polypropylen biologisch abbaubar und sind nicht geeignet Temperaturen zu ertragen, welche typischerweise in der Lebensmittelverpackung Auftreten. Polyethylen und Polypropylen schmelzen spätestens bei 120 °C und werden ab -20°C brüchig. Das Einfrieren von Lebensmitteln erfolgt bei bis zu -40°C und das Erwärmen beispielsweise im Backofen erfolgt bei 185°C.

In der EP 2 586 606 A1 ist ein tiefziehbares Verpackungsmaterial beschrieben, welches einen Schichtverbund mit zwei Kartonschichten und einer dazwischen liegenden Schicht aus Kunststoff, insbesondere Polyethylen oder Polypropylen umfasst. Das Verpackungsmaterial umfasst eine Barriereschicht, welche Ethylen-Vinylalakohol-Copolymer, eine keramische Beschichtung oder eine Metallfolie sein. Weder die Kunststoffschicht noch die Barriereschicht sind biologisch abbaubar. Ferner sind weder Polyethylen noch Polypropylen dazu geeignet Temperaturen zu ertragen, welche beim Einfrieren von verpackten Lebensmitteln bis -40°C betragen und beim Erhitzen bzw. Erwärmen von verpackten Lebensmitteln bis zu 185°C betragen.

Die Kartonschichten besitzen eine hohe Elastizität. Dies führt dazu, dass ein Zerreissen des Laminats während des Tiefziehens verhindert werden kann. Die Kartonschichten besitzen nach dem Tiefziehen jedoch eine Rückstellkraft, welche für die Formhaltigkeit des Verpackungsmaterials von Nachteil sein kann. Dem muss durch die spezielle Auswahl einer thermoplastischen Kunststoffschicht entgegengewirkt werden, welche während des Tiefziehens schmilzt und sich im Anschluss nach dem Tiefziehen wieder verfestigt.

### Aufgabe der Erfindung

Aufgabe der Erfindung ist es daher einen eigenstabilen Behälter zur Verpackung von Lebensmitteln vorzuschlagen, welcher biologisch abbaubar, kompostierbar und erhitzbar ist. Gleichzeitig soll der Behälter für ein Verpacken von Lebensmitteln mit modifizierter Atmosphäre geeignet sein.

Beschreibung Die Erfindung betrifft einen Behälter wie in Anspruch 1 definiert, und ein Verfahren zur Herstellung davon wie in Anspruch 13 definiert. Bevorzugte Ausführungsformen sind in den abhängigen Ansprüchen definiert.

Die Erfindung betrifft einen Behälter zur Aufbewahrung von Lebensmitteln mit einem eine Siegelfläche aufweisenden Siegelrand. Der Behälter ist frei von zusätzlichen Umverpackungen zur Stabilisierung. Es handelt sich also nicht um eine Schicht eines Behälters, beispielsweise ein in eine Umverpackung einlegbares Laminat, welche nicht ausreichend stabil ist und demnach von dem Gewicht des vorgesehenen abzufüllenden Inhalt mechanisch verformt wird, sondern um einen eigenstabilen Behälter. An dem Siegelrand kann der Behälter mit einem Deckel oder einer Folie versiegelt werden, indem der Deckel oder die Folie mit der Siegelfläche versiegelt wird. Der Behälter ist aus einem Laminat ausgeformt, welches eine erste Trägerschicht und eine Barriereschicht umfasst. Die beiden Schichten sind mit einem Adhäsiv miteinander verbunden.

Das Laminat umfasst weiterhin eine zweite Trägerschicht aus Karton oder Papier, hergestellt aus mechanisch zerkleinerter Pulpe, einem ein- oder mehrlagigen Papier oder Zellstoff und ein zweites Adhäsiv zur Verbindung der ersten und der zweiten Trägerschicht.

Die Lösung der gestellten Aufgabe gelingt bei einem eigenstabilen Behälter dadurch, dass zumindest der Siegelrand des Behälters bzw. die Siegelfläche des Siegelrandes frei von Falten ist und dass der Behälter nach der Europäischen Norm EN 13432 kompostierbar bzw. biologisch abbaubar ist. Durch die zweite Trägerschicht und das zweite Adhäsiv entsteht ein dehnbares Laminat, dessen Dehnbarkeit beim Thermoformen zunimmt. Ecken und Kanten einer Form werden an dem Laminat daher nicht so wie beim Stand der Technik dadurch gebildet, dass überschüssiges Laminat zu Falten gelegt wird. Vielmehr lässt sich das Material des Laminats dehnen bzw. überstrecken, wodurch insbesondere der Siegelrand frei von Falten, Erhebungen und Vertiefungen ist und dadurch an der gesamten Siegelfläche durchgängig glatt und eben ist. Dadurch lässt sich der Siegelrand des erfindungsgemässen Behälters gasdicht mit einem Verschlussdeckel versiegeln.

Bei der Herstellung von Behältern nach dem Stand der Technik entstehen während des Tiefziehens an dem Siegelrand und an den Rundungen und Kanten des Behälters zwangsläufig Falten. Dies resultiert daraus, dass bei der Umformung eines zweidimensionalen Laminats in einen dreidimensionalen Behälter überschüssiges Material an den Ecken und Rundungen vorhanden ist, welches in Falten gelegt werden muss, um die gewünschte dreidimensionale Form des Behälters zu erreichen. Damit das überschüssige Material nicht willkürlich in Falten gelegt wird, wird es vorgefaltet. Die Thermoformung wird benutzt um den Rückstelleffekt des elastischen Laminats zu unterbinden. Im Unterschied zum Stand der Technik wird das Laminat während des Tiefziehprozesses nicht nur elastisch verformt, sondern über die Elastizitätsgrenze der ersten und zweiten Trägerschicht in den plastischen Bereich gedehnt bzw. gestreckt. Die Trägerschichten können nicht mehr in ihre ursprünglich Form zurückkehren und erhalten eine dauerhafte Verformung. Dadurch besitzen die Kartonschichten keine Rückstellkraft mehr und bleiben formstabil. Durch die Überstreckung bzw. die Dehnung lässt sich das Laminat faltenfrei in dem Tiefziehprozess ausformen. Da die Trägerschichten nach der Verformung keine Rückstellkraft besitzen, ist eine Verformung des tiefgezogenen Behälters, nachdem dieser tiefgezogen wurde, sicher vermieden. Der Fachmann würde eine Überstreckung der Kartonschichten über die Elastizitätsgrenze nicht in Erwägung ziehen, da Laminate gemäss dem Stand der Technik eine geringere Bruchdehnung als das erfindungsgemässe Laminat besitzen und brechen oder reissen würde, bevor das Laminat in einen faltenfreien Zustand umgeformt werden kann.

Das faltenfreie Tiefziehen durch Thermoformen wird noch dadurch erleichtert, dass die einzelnen Schichten des Laminats bei Erhitzung gegeneinander leicht verschiebbar sind. Der erfindungsgemässe Behälter ist daher geeignet, dass Lebensmittel unter modifizierter Atmosphäre verpackt werden können.

Denkbar ist es, dass auch nur eine Trägerschicht vorgesehen ist, falls der Behälter eine Muldentiefe von 20 mm nicht übersteigt und das Füllgewicht des Lebensmittels 150 g nicht übersteigt.

In einer besonders bevorzugten Ausführungsform sind die erste und/oder die zweite Trägerschicht aus einem Papier hergestellt, welches ein Flächengewicht von wenigstens 90 g/m2 und eine Bruchdehnung von wenigstens 7,5% in der Längsausrichtung und wenigstens 6,5% in der Querrichtung aufweist. Durch die verbesserte Bruchdehnung der Papiere in beiden Dimensionen bzw. Richtungen tragen diese zu einer verbesserten Bruchdehnung bzw. Dehnbarkeit des Laminats bei wenigstens 14,5% in der Längsrichtung und wenigstens 12,5% in der Querrichtung bei. Damit die erste und die zweite Trägerschicht aus Karton in dem Tiefziehprozess gedehnt werden können, also über ihre Elastizitätsgrenze gestreckt werden, muss die Bruchdehnung des ausgewählten Papiers den beanspruchten Werten entsprechen.

Zweckmässigerweise sind das erste und/oder das zweite Adhäsiv vinyl-copolymer-basiert. Bevorzugt besitzen Adhäsive ein Trockengewicht von wenigstens 3 g/m². Die beiden Adhäsive können die Gesamtelastizität des Laminats verbessern.

In einer weiteren bevorzugten Ausführungsform ist das erste Adhäsiv eine Extrusionsfolie aus kompostierbarem Biopolymer mit einem Flächengewicht von wenigsten 12 g/m² und das zweite Adhäsiv ist eine Extrusionsfolie aus kompostierbarem Biopolymer mit einem Flächengewicht von wenigsten 10 g/m². Dadurch ist das Laminat noch besser biologisch abbaubar und die Dehnbarkeit und die Verbindung des Laminats wird weiterhin verbessert. Das Laminat besteht daher aus zwei Lagen von Papier, wobei die Extrusionsfolien als Adhäsiv und als Barriereschicht wirken können. Die erste Extrusionsfolie kann ebenfalls als eine Barriereschicht wirken. Sie besitzt jedoch eine geringere Hitzefestigkeit und eine geringere Feuchtigkeits- und Sauerstoffbarriere. Für Anwendungen, bei welchen diese Eigenschaften die Marktanforderungen erfüllen, kann auf eine weitere Barriereschicht verzichtet werden. Im Gegensatz zum Stand der Technik, bei welchem die mechanischen Eigenschaften des Laminats durch die Kunststoffschichten in Kombination mit den Kartonschichten erreicht werden, ist das erste und zweite Adhäsiv nur dazu da, die erste und die zweite Trägerschicht aus Karton miteinander zu verbinden und die erste Trägerschicht mit der Barriereschicht zu verbinden. Da die Adhäsive lediglich klebende Eigenschaften besitzen müssen, können sie aus dem Bereich der biologisch abbaubaren und kompostierbaren Adhäsive ausgewählt werden.

Zweckmässigerweise ist die Barriereschicht eine Cellulosehydrat-Folie, welche wenigstens an der dem aufzubewahrenden Lebensmittel zugewandten oder abgewandten Seite mit einer ersten dampfsperrenden Beschichtung versehen ist.

Die Barriereschicht ist gemäss einer Ausführungsform der Erfindung ein extrudiertes oder laminiertes kompostierbares Biopolymer, welches als erstes Adhäsiv wirkt. Dadurch lassen sich die Kosten der Barriereschicht senken.

In einer weiteren bevorzugten Ausführungsform beträgt die Wasserdampfdurchlässigkeit der Barriereschicht bei 38 °C und 90% Luftfeuchtigkeit über 24 Stunden weniger als 40 g/m², bevorzugt weniger als 30 g/m² und ganz besonders bevorzugt weniger als 15 g/m² beträgt. Der Behälter ist daher feuchtigkeits- und wasserresistent auf der Seite, welche dem zu verpackenden Lebensmittel zugewandt ist.

In einer weiteren bevorzugten Ausführungsform beträgt die Sauerstoffdurchlässigkeit der Barriereschicht bei 23 °C und 50% Luftfeuchtigkeit über 24 Stunden weniger als 30 cm3/m2.24h.bar, bevorzugt weniger als 15 cm3/m2.24h.bar und ganz besonders bevorzugt weniger als 5 cm3/m2.24h.bar. Diese Barrierewerte belegen, dass eine modifizierte Atmosphäre in dem verschlossenen Behälter gegenüber Luftsauerstoff gut abgeschirmt ist und die Schutzgasatmosphäre in dem Behälter aufrecht erhalten werden kann: Tests haben ergeben, dass bei dem unter modifizierter Atmosphäre beaufschlagte und mit dem Deckel versiegelte Behälter die Atmosphäre innerhalb des Behälter nach 28 Tagen eine Sauerstoffkonzentration von weniger als 0,6 Vol% aufweist.

Die Erfindung zeichnet sich bevorzugt dadurch aus, dass die Barriereschicht eine Extrusionsfolie aus kompostierbarem Biopolymer ist, wobei die Extrusionsfolie ein Flächengewicht von wenigstens 12 g/m² aufweist. Dadurch kann das Laminat in einer Tandem-Extrusionsmaschine hergestellt werden. Das heisst, das Laminat kann in einem einzigen Prozess hergestellt werden, wodurch die Produktionsgeschwindigkeit steigt.

In einer weiteren Ausführungsform ist die Barriereschicht eine wasserbasierte Streichfarbe, wobei die Streichfarbe ein Strichgewicht von wenigstens 12 g/m² aufweist. Diese Ausführungsform ist besonders gut biologisch abbaubar. Als Materialien sind Acrylpolymere, Acrylcopolymere, Styrolcopolymere und Ethylenvinylacetat-Copolymere denkbar.

Bevorzugt ist es, wenn die Barriereschicht heiss- oder kaltsiegelbar ist. Dadurch lässt sich der Behälter an dem Siegelrand besonders einfach mit einem Deckel oder einer Folie versiegeln.

Zweckmässigerweise ist der offene Rand des Siegelrandes ein rundum laufender Bördelrand. Ein solcher Rand wird umgebogen bzw. umgerollt, wodurch eine Versteifung des Randes bzw. der Kante erzielt wird. Der Bördelrand kann daher auch als Rollrand bezeichnet werden. Dadurch wird der Behälter stabiler und es kann dessen Wandstärke reduziert werden.

In einer besonders bevorzugten Ausführungsform der Erfindung ist der offene Rand des Siegelrandes derart nach oben eingerollt ist, dass sich der offene Rand innerhalb des Bördelrandes befindet und an dem Bördelrand eine weitere Siegelfläche gebildet ist. Diese Ausführungsform hat den Vorteil, dass der offene Rand des Laminats vor der äusseren Umgebung, insbesondere vor Feuchtigkeit und Dampf vollständig geschützt ist, sobald der Deckel auf den Siegelrand aufgesiegelt ist. Der offene Rand ist derart eingerollt, dass er zwischen dem Siegelrand und dem Bördelrand angeordnet ist. Wird der Deckel mit der Siegelfläche des Siegelrandes und einer weiteren Siegelfläche an dem Bördelrand versiegelt, so ist der offene Rand hermetisch gegenüber der Umgebung geschützt. Solange die Versiegelung dicht ist, kann keine Feuchtigkeit oder Dampf an den offenen Rand vordringen und diesen beschädigen.

Die Erfindung zeichnet sich dadurch aus, dass das Laminat eine Bruchdehnung von wenigstens 12 % sowohl in der Bearbeitungsrichtung als auch in der Querrichtung aufweist. Das Laminat hat mindestens eine 50% höhere Bruchdehnung als die stärkste Schicht des Laminats. Dadurch eignet sich das Laminat besonders gut beim Thermoformen gedehnt zu werden bzw. in den plastischen Bereich gestreckt zu werden. Das Laminat kann daher in die Ecken und Kanten einer Tiefziehform hineingedehnt werden und wird an diesen Stellen nicht in Falten gelegt.

Zweckmässigerweise ist das Laminat tiefzieh- und thermoformbar, um daraus eigenstabile Nahrungsmittelbehälter herstellen zu können. Trotz dem Einsatz eines mehrschichtigen Papiers als Laminats entstehen beim Thermoformen keine Falten oder Verknitterungen an dem Siegelrand des hergestellten Behälters.

In einer weiteren bevorzugten Ausführungsform der Erfindungen betragen die Barriereparameter des Laminats für die Wasserdampfdurchlässigkeit bei 23 °C und 85% Luftfeuchtigkeit über 24 Stunden weniger als 220 g/m², bevorzugt weniger als 100 g/m² und ganz besonders bevorzugt weniger als 15 g/m² Die Sauerstoffdurchlässigkeit des Laminats beträgt bei 23 °C und 0% Luftfeuchtigkeit über 24 Stunden weniger als 1500 cm³/m².24h.bar, bevorzugt weniger als 15 cm³/m².24h.bar und ganz besonders bevorzugt weniger als 3 cm³/m².24h.bar. Dadurch ist das verpackte Lebensmittel ausreichend vor Luftsauerstoff geschützt. Auch kann das Laminat durch Wasserdampf von der inneren Seite nicht aufweichen und das Lebensmittel nicht austrocknen.

In einer weiteren bevorzugten Ausführungsform weist der Behälter einen Boden auf an dem das Laminat derart verformt ist, dass an dem Boden wenigstens eine Verstärkungsrippe ausgebildet ist und/oder das Laminat derart verformt ist, dass der Behälter eine Mehrzahl von Mulden für die Aufnahme von Lebensmitteln aufweist. Die Möglichkeit der Verformung des Laminats über seine Elastizitätsgrenze hinaus zu verformen hat nicht nur den Vorteil, dass der Siegelrand und auch andere Ecken und Kanten des Behälters faltenfrei sind. Es können auch zusätzliche Formen an dem Behälter tiefgezogen werden, welche in der gewünschten Form durch Überstreckung in den Bereich über die Elastizitätsgrenze bestehen bleiben. Das Ausformen von Verstärkungsrippen hat den Vorteil, dass der Boden ausreichende Stabilität besitzt, wenn die Laminatstärke reduziert wird. Dadurch lassen sich Materialkosten sparen. Die Tiefe der Verstärkungsrippen ist bevorzugt grösser oder gleich 2mm.

Auch lässt sich ein Behälter, insbesondere eine Schale, herstellen, welche mehrere Mulden aufweist. Dadurch können in der Schale mehrere Lebensmittel getrennt voneinander in der Schale abgepackt werden.

Besonders bevorzugt ist es, wenn das Laminat durch eine Tandem-Extrusions-Laminierung erhältlich ist. Dadurch kann es besonders rasch in einem einzigen Prozess hergestellt werden. Dies Merkmal führt zu einem günstigen und wettbewerbsfähigen Laminat.

Ein weitere Aspekt der Erfindung betrifft ein Verfahren zur Herstellung des erfindungsgemässen eigenstabilen Behälters aus oben beschriebenen Laminat, dadurch gekennzeichnet, dass das Laminat zu dem Behälter in einem Tiefziehverfahren geformt wird und eine erste und/oder zweite Trägerschicht aus Karton oder Papier über ihre Elastizitätsgrenze hinaus verformt und dadurch faltenfrei zu dem Behälter gedehnt werden. Dadurch lassen sich faltenfreie tiefgezogene Schalen und insbesondere Behälter mit einem faltenfreien Siegelrand herstellen. Da die Trägerschichten aus Karton bzw. Papier über ihre Elastizitätsgrenze gedehnt werden, kehren sie nicht in ihre Ausgangsform zurück. Um diese Dehnung mit einer Tiefziehanlage zu erreichen, müssen die Trägerschichten eine bestimmte Elastizitätsgrenze und Bruchdehnung besitzen, damit sie durch das Tiefziehen in den plastischen Bereich übergeführt werden können. Der plastische Bereich liegt zwischen der Elastizitätsgrenze und der Bruchdehnung.

In einem bevorzugten Verfahrensschritt wird das Laminat zu dem Behälter thermogeformt und bei der Thermoformung faltenfrei gestreckt, wobei die einzelnen Laminatschichten während der Thermoformung aneinander leicht gleiten. Die Merkmale des Laminats führen dazu, dass es in eine Tiefziehform gedehnt werden kann und kein überschüssiges Laminat vorhanden ist, das in Falten gelegt werden muss, um die Behälterform zu erreichen.

Das Laminat ist auf der Aussenseite und auf der zweiten Trägerschicht bedruckbar. Dadurch kann die Innenseite und die Aussenseite des Behälters optisch ansprechender gestaltet sein. An der Innenseite kann der Druck gesehen werden, da die Extrusion, das Adhäsiv und die Barriereschicht transparent sind.

Der Behälter kann auf der Aussenseite Feuchtigkeit ausgesetzt sein, da sich an der Aussenseite beim Auftauen oder Wiedererwärmen des verpackten Lebensmittels Kondenswasser bilden kann. Um das Eindringen des Kondenswassers von aussen in das Laminat zu verhindern, ist es denkbar die Aussenseite mit einer wasserabstossenden Schicht zu lackieren. Der verwendete Lack kann eine Dispersion aus einem Acrylcopolymer oder anderen wasserabweisenden Polymeren wie Polyacrylcopolymere, Styrolcopolymere oder Acrylsäure-Copolymere sein. Auch eine Kombination der aufgezählten Polymere ist denkbar.

Weitere Vorteile und Merkmale ergeben sich aus der nachfolgenden Beschreibung eines Ausführungsbeispiels der Erfindung unter Bezugnahme auf die schematischen Darstellungen. Es zeigt in nicht massstabsgetreuer Darstellung:
- Figur 1:: einen Querschnitt durch das erfindungsgemässe Laminat und
- Figur 2:: einen Querschnitt durch das erfindungsgemässen Behälter.

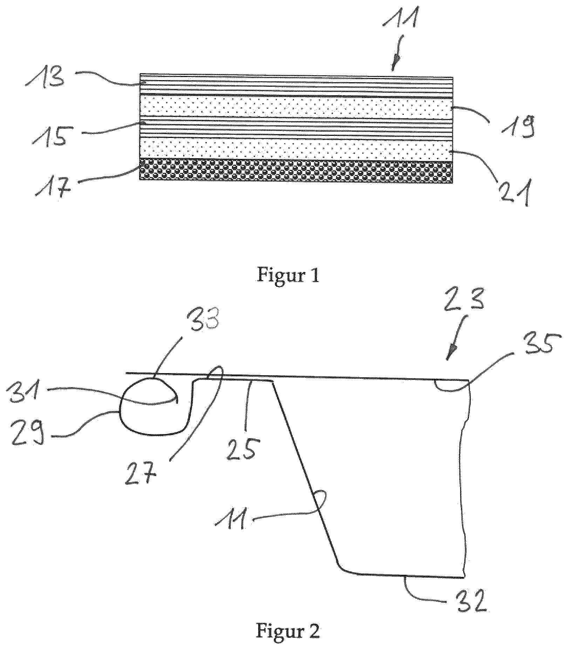

Der erfindungsgemässe Behälter 23 zur Verpackung von Lebensmitteln ist aus einem Laminat hergestellt. In Figur 1 ist das Laminat, insbesondere Verpackungslaminat, welches gesamthaft mit dem Bezugszeichen 11 bezeichnet ist, gezeigt. Die Basis des Laminats bildet eine erste und zweite Trägerschicht 13, 15, welche dem Laminat Stabilität geben. Die Trägerschichten 13,15 können ein Karton, ein steifes ein- oder mehrlagiges Papier sein oder aus Zellstofffasern hergestellt sein. Die Trägerschichten 13,15 können aus reiner mechanisch zerkleinerter und gebleichter Pulpe hergestellt sein. Damit die Trägerschichten 13,15 zur Herstellung von Gefässen tiefgezogen werden können, weisen sie eine entsprechende Zugfestigkeit auf. Der Herstellausschuss kann dadurch reduziert und die Produktionsgeschwindigkeit erhöht werden. Bevorzugt sind die erste und zweite Trägerschicht 13,15 ein Papier mit ein Flächengewicht von wenigstens 90 g/m².

Die Dehnbarkeit liegt dabei bei wenigstens 7,5% in der Längsrichtung und bei wenigstens 6,5% in der Querrichtung. Diese Merkmale des ersten und zweiten Papiers tragen dazu bei, dass das Laminat ein dehnbarer, elastischer Werkstoff während des Thermoformens des Laminats 11 ist. Auch ist die erste und zweite Trägerschicht 13,15 nach dem Thermoformen so steif, dass sie den Anforderungen an ein Lebensmittelgefäss und insbesondere eine Lebensmittelschale gerecht wird. Neben Schalen kann das Verpackungslaminat als Tabletts usw. ausgeformt werden.

Die erste Trägerschicht 15 besitzt eine erste Oberfläche, welche dem zu verpackenden Lebensmittel zugewandt ist, und eine zweite Oberfläche, welche der zweiten Trägerschicht 13 zugewandt ist. An der ersten Oberfläche ist eine Barriereschicht 17 vorgesehen, welche die Sauerstoff- und die Wasserdampfdurchlässigkeit des Laminats 11 reduziert. Die Barriereschicht 17 besitzt eine Wasserdampfdurchlässigkeit von höchstens 15g/m² 24h bar. Die Sauerstoffdurchlässigkeit beträgt bevorzugt 3 cm³/ m²·24h·bar. Die Dicke der Barriereschicht 17 beträgt bevorzugt mindestens 10 µm.

Das erste und zweite Papier 13,15 bzw. das erste Papier 15 und die Barriereschicht 17 sind durch ein erstes und ein zweites Adhäsiv 19,21 miteinander verklebt. Das erste und zweite Adhäsiv 19,21 können vinyl copolymer-basiert sein. Bevorzugt sind das erste und das zweite Adhäsiv 19,21 jedoch Extrusionsfolien. Dadurch besteht das Laminat 11 aus zwei Papieren, welche durch die erste Extrusionsfolie miteinander verklebt sind. Die erste und zweite Extrusionsfolie 19,21 sind bevorzugt kompostierbare Biopolymere mit einem Flächengewicht von wenigstens 10 g/m². Die zweite Extrusionsfolie kann auch die benötigten Barriereeigenschaften besitzen, wodurch auf eine zusätzlich Barriereschicht 17 verzichtet werden kann. Die zweite Extrusionsfolie 21 weist in diesem Fall ein Flächengewicht von wenigstens 12 g/m² auf.

Das Laminat 11 besitzt eine Bruchdehnung von wenigstens 12% in der Bearbeitungsrichtung und in der Querrichtung. Da das Laminat 11 eine Dicke von wenigstens 250 µm aufweist, ist ein daraus hergestellter Behälter eigenstabil und ausreichend steif. Die Temperaturbeständigkeit liegt zwischen -40°C und mindestens 110°C und vorzugsweise mindestens 185°C. In einem aus dem Laminat 11 hergestellten Behälter können daher Lebensmittel eingefroren und erwärmt werden. Das Laminat und der Behälter sind biologisch abbaubar und kompostierbar gemäss Euronorm 13432:2002. Das Laminat hat einen Anteil an erneuerbaren Rohstoffen von 95% und bevorzugt von 98%. Die Barriereeigenschaften des Laminats lassen sich wie folgt angeben: Die Wasserdampfdurchlässigkeit beträgt bevorzugt bei 23 °C und 85% Luftfeuchtigkeit über 24 Stunden weniger als 15 g/m². Die Sauerstoffdurchlässigkeit des Laminats 11 beträgt bevorzugt bei 23 °C und 0% Luftfeuchtigkeit über 24 Stunden weniger als 3 cm3/m2.24h.bar.

Das Laminat 11 lässt sich thermoformen, indem es im erhitzten Zustand in einer Form tiefgezogen wird. Nach diesem Verfahren lässt sich ein Nahrungsmittelbehälter 23 mit einem abstehenden eine Siegelfläche 27 aufweisenden Siegelrand 25 herstellen. Der Siegelrand kann durch einen Bördel- bzw. Rollrand 29 abgeschlossen sein. Der Rollrand verleiht dem Behälter 23 zusätzliche Stabilität, wodurch die Wandstärke des Behälters 23 reduziert werden kann.

Wie Figur 2 zeigt, ist das offene Ende 31 des Siegelrandes 25 nach oben eingerollt. Der Bördel- bzw. Rollrand 29 ist derart nach unten in Richtung des Bodens 32 versetzt, dass an seiner Oberseite eine weitere Siegelfläche 33 gebildet ist. Ein Deckel 35 kann nun an der Siegelfläche 27 und der weiteren Siegelfläche 33 mit dem Behälter 23 gasdicht verbunden werden. Da das offene Ende 31 des Siegelrandes zwischen der Siegelfläche 27 und der weiteren Siegelfläche 33 angeordnet ist, ist es hermetisch gegenüber der Umgebung abgeschlossen, wenn der Deckel 35 auf die Siegelfläche 27 und die weitere Siegelfläche 33 aufgesiegelt ist. Der offene Siegelrand 31 ist daher zuverlässig vor Feuchtigkeit und Dampf geschützt. Die einzelnen Schichten des Laminats 11 können sich demnach an dem offenen Ende 31, begründet durch Dampf oder Feuchtigkeit, nicht voneinander lösen.

Während des Erhitzens des Laminats 11 bei der Thermoformung wird das Laminat derart elastisch, dass der Siegelrand ausgeformt werden kann, ohne dass sich Falten oder Rillen bilden würden. Der Siegelrand ist daher glatt und eben. Die Faltenfreiheit zumindest des Siegelrandes 25 wird dadurch erreicht, dass das Laminat 11 eine höhere Bruchdehnung besitzt als Laminate des Stands der Technik. Durch die erhöhte Bruchdehnung kann das Laminat 11 während des Tiefziehens über seine Elastizitätsgrenze hinaus in den plastischen Bereich gestreckt werden, um die gewünschte Form zu erreichen und dabei nicht zu reissen. Dadurch, dass die Elastizitätsgrenze des Laminats 11 gezielt überschritten wird ohne an die Bruchdehnung zu gelangen, besitzt das Laminat an den überstreckten Bereichen keine Rückstellkraft mehr. Der Behälter 23 verbleibt daher in der durch den Tiefziehprozess gegebenen Form ohne dass sich diese nach der Formgebung verändern würde. Die Elastizität wird während des Thermoformens noch weiter verbessert, dadurch, dass die einzelnen Lagen durch die Erhitzung aneinander gleiten können und sich zueinander verschieben lassen. Der Siegelrand 25 lässt sich daher gasdicht mit einem Deckel 35 versiegeln. Der erfindungsgemässe Behälter 23 kann daher schutzbegast werden bzw. ist für ein Verpacken unter modifizierter Atmosphäre geeignet. Neben den Merkmal, dass der Behälter ein Verpacken mit modifizierter Atmosphäre zulässt, besitzt er eine geringe Wasserdampf- und Sauerstoffdurchlässigkeit und ist fettresistent. Er ist biologisch abbaubar und kompostierbar und ist ausreichend temperaturfest, um darin Nahrungsmittel einfrieren und erhitzen zu können. Die Stabilität des Behälters 23 ist durch den Siegelrand 25 und den Bördelrand 29 weiter verbessert.

### Legende:

- 11: Laminat, Verpackungslaminat
- 13: Zweite Trägerschicht
- 15: Erste Trägerschicht
- 17: Barriereschicht
- 19: Zweites Adhäsiv
- 21: Erstes Adhäsiv
- 23: Nahrungsmittelbehälter
- 25: Siegelrand
- 27: Siegelfläche
- 29: Bördelrand, Rollrand
- 31: Offenes Ende des Siegelrandes
- 32: Boden des Behälters
- 33: Weitere Siegelfläche
- 35: Deckel

## Patentansprüche

1. Behälter (23) zur Aufbewahrung von Lebensmitteln mit einem eine Siegelfläche (27) aufweisenden Siegelrand (25), welcher Behälter (23) frei ist von zusätzlichen Umverpackungen zur Stabilisierung und an welchem ein Deckel (35) oder eine Folie zur Versiegelung des Behälters (23) anbringbar ist, ausgeformt aus einem Laminat (11) umfassend
- eine erste Trägerschicht (15) aus Karton, hergestellt aus mechanisch zerkleinerter Pulpe, einem ein- oder mehrlagigen Papier oder Zellstoff,
- eine Barriereschicht (17), aus einem, fett-, wasser- und hitzebeständigen Material auf der dem aufzubewahrenden Lebensmittel zugewandten Seite,
- ein erstes Adhäsiv (21) zur Verbindung der Trägerschicht (15) und der Barriereschicht (17), wobei die Trägerschicht (15), das Adhäsiv (21) und die Barriereschicht (17) lebensmittelecht sind,
- eine zweite Trägerschicht (13) aus Karton oder Papier, hergestellt aus mechanisch zerkleinerter Pulpe, einem ein- oder mehrlagigen Papier oder Zellstoff und
- ein zweites Adhäsiv (19) zur Verbindung der ersten und der zweiten Trägerschicht (13,15), wobei
- der Behälter (23) nach der Europäischen Norm EN 13432 kompostierbar bzw. biologisch abbaubar ist,
**dadurch gekennzeichnet,**
- **dass** die Sauerstoffdurchlässigkeit des Laminats (11) bei 23 °C und 0% Luftfeuchtigkeit über 24 Stunden weniger als 1500 cm³/m².24h.bar, bevorzugt weniger als 15 cm³/m².24h.bar und ganz besonders bevorzugt weniger als 3 cm³/m².24h.bar beträgt,
- **dass** das Laminat (11) eine Bruchdehnung von wenigstens 12 % sowohl in der Bearbeitungsrichtung als auch in der Querrichtung aufweist und
- **dass** zumindest der Siegelrand (25) des Behälters (23) bzw. die Siegelfläche (27) des Siegelrandes (25) frei von Falten ist.

2. Behälter nach Anspruch 1, **dadurch gekennzeichnet, dass** die erste Trägerschicht (15) aus einem Papier hergestellt ist, welches ein Flächengewicht von wenigstens 90 g/m² und eine Bruchdehnung von wenigstens 7,5% in der Bearbeitungsrichtung und wenigstens 6,5% in der Querrichtung aufweist und dass die zweite Trägerschicht (13) aus einem Papier hergestellt ist, welches ein Flächengewicht von wenigstens 90 g/m² und eine Bruchdehnung von wenigstens 7,5% in der Bearbeitungsrichtung und wenigstens 6,5% in der Querrichtung aufweist.

3. Behälter nach einem der vorangehenden Ansprüche, **dadurch gekennzeichnet, dass** das erste Adhäsiv (21) und/oder das zweite Adhäsiv (19) vinyl-copolymer-basiert oder ethylenvinyl-copolymer-basiert ist.

4. Behälter nach einem der vorangehenden Ansprüche, **dadurch gekennzeichnet, dass** das erste Adhäsiv (21) und/oder das zweite Adhäsiv (19) eine Extrusionsfolie aus kompostierbarem Biopolymer mit einem Flächengewicht von wenigsten 10 g/m² ist.

5. Behälter nach einem der vorangehenden Ansprüche, **dadurch gekennzeichnet, dass** die Barriereschicht (17) eine Cellulosehydrat-Folie ist, welche wenigstens an der dem aufzubewahrenden Lebensmittel zugewandten oder abgewandten Seite mit einer ersten dampfsperrenden Beschichtung versehen ist.

6. Behälter nach einem der Ansprüche 1 bis 4, **dadurch gekennzeichnet, dass** die Barriereschicht (17) ein extrudiertes oder laminiertes kompostierbares Biopolymer ist, welche als erstes Adhäsiv (21) wirkt.

7. Behälter nach einem der vorangehenden Ansprüche, **dadurch gekennzeichnet, dass** die Barriereschicht (17) eine Extrusionsfolie aus kompostierbarem Biopolymer ist, welche als erstes Adhäsiv (21) wirkt, oder eine wasserbasierte Streichfarbe ist, wobei die Barriereschicht ein Flächengewicht von wenigstens 12 g/m² aufweist.

8. Behälter nach einem der vorangehenden Ansprüche, **dadurch gekennzeichnet, dass** die Barriereschicht (17) heiss- oder kaltsiegelbar ist.

9. Behälter nach einem der vorangehenden Ansprüche, **dadurch gekennzeichnet, dass** der offene Rand (31) des Siegelrandes (25) ein rundum laufender Bördelrand (29) ist.

10. Behälter nach Anspruch 9, **dadurch gekennzeichnet, dass** der offene Rand (31) des Siegelrandes (25) derart nach oben eingerollt ist, dass sich der offene Rand (31) innerhalb des Bördelrandes (29) befindet und an dem Bördelrand (29) eine weitere Siegelfläche (33) gebildet ist.

11. Behälter nach einem der vorangehenden Ansprüche, **dadurch gekennzeichnet, dass** die Wasserdampfdurchlässigkeit des Laminats (11) bei 23 °C und 85% Luftfeuchtigkeit über 24 Stunden weniger als 220 g/m², bevorzugt weniger als 100 g/m² und ganz besonders bevorzugt weniger als 15 g/m² beträgt.

12. Behälter nach einem der vorangehenden Ansprüche, **dadurch gekennzeichnet, dass** der Behälter (23) einen Boden (32) aufweist an dem das Laminat (11) derart verformt ist, dass an dem Boden (32) wenigstens eine-Verstärkungsrippe ausgebildet ist und/oder das Laminat (11) derart verformt ist, dass der Behälter (23) eine Mehrzahl von Mulden für die Aufnahme von Lebensmitteln aufweist.

13. Verfahren zur Herstellung eines eigenstabilen Behälters (23) aus einem Laminat (11) gemäss einem der vorangehenden Ansprüche,
**dadurch gekennzeichnet,**
**dass** das Laminat (11) aufweisend eine Bruchdehnung von wenigstens 12 % sowohl in der Bearbeitungsrichtung als auch in der Querrichtung zu dem Behälter (23) in einem Tiefziehverfahren geformt wird und eine erste und/oder zweite Trägerschicht (13,15) aus Karton oder Papier über ihre Elastizitätsgrenze hinaus verformt und dadurch faltenfrei zu dem Behälter (23) gedehnt werden.

## Claims

1. Container (23) for storing food with a sealing edge (25) that has a sealing surface (27), which container (23) is free from additional outer packaging for stabilizing and on which a lid (35) or a foil can be mounted for sealing the container (23) that is molded from a laminate (11) and comprises:
- a first carrier layer (15) of cardboard produced from mechanically shredded pulp, from a single-ply or multi-ply paper or cellulose,
- a barrier layer (17) from a greaseproof, water-repellent and heat-resistant material on the side turned to the foodstuff to be stored,
- a first adhesive (21) for joining the carrier layer (15) and the barrier layer (17), wherein the carrier layer (15), the adhesive (21) and the barrier layer (17) are foodsafe,
- a second carrier layer (13) of cardboard or paper produced from mechanically shredded pulp, from a single-ply or multi-ply paper or cellulose and
- a second adhesive (19) for joining the first and the second carrier layer (13, 15), wherein
- the container (23) is compostable and/or biodegradable according to the European standard EN 13432,
**characterized in**
- **that** the oxygen permeability of the laminate (11) is, at 23°C and 0% air humidity over 24 hours, less than 1500 cm³/m².24h.bar, preferably less than 15 cm³/m².24h.bar and most preferably less than 3 cm³/m².24h.bar,
- the laminate (11) has an elongation at rupture of at least 12% as well in the processing direction as in the transverse direction and
- **that** at least the sealing edge (25) of the container (23) or the sealing surface (27) of the sealing edge (25) is free of folds.

2. Container according to claim 1, **characterized in that** the first carrier layer (15) is made from a paper that has a basis weight of at least 90 g/m² and an elongation at rupture of at least 7,5% in the processing direction and at least 6,5% in the transverse direction and that the second carrier layer (13) is made from a paper that has a basis weight of at least 90 g/m² and an elongation at rupture of at least 7,5% in the processing direction and at least 6,5% in the transverse direction.

3. Container according to one of the preceding claims, **characterized in that** the first adhesive (21) and/or the second adhesive (19) is based on vinyl copolymer or ethylenvinyl copolymer.

4. Container according to one of the preceding claims, **characterized in that** the first adhesive (21) and/or the second adhesive (19) is an extruded foil made of compostable biopolymer with a basis weight of at least 10 g/m².

5. Container according to one of the preceding claims, **characterized in that** the barrier layer (17) is a cellulose hydrate foil that is provided at least on the side turned or opposed to the foodstuff to be stored with a first vapor barrier coating.

6. Container according to one of the claims 1 to 4, **characterized in that** the barrier layer (17) is an extruded or laminated compostable biopolymer that acts as a first adhesive (21).

7. Container according to one of the preceding claims, **characterized in that** the barrier layer (17) is an extruded foil of a compostable biopolymer that acts as a first adhesive (21) or a water-based coating color, wherein the barrier layer has a basis weight of at least 12 g/m².

8. Container according to one of the preceding claims, **characterized in that** the barrier layer (17) is heat sealable or cold sealable.

9. Container according to one of the preceding claims, **characterized in that** the open edge (31) of the sealing edge (25) is an all-around running beaded edge (29).

10. Container according to one of the preceding claims, **characterized in that** the open edge (31) of the sealing edge (25) is rolled up upwards in such a manner that the open edge (31) is situated inside the beaded edge (29) and a further sealing surface (33) is formed on the beaded edge (29).

11. Container according to one of the preceding claims, **characterized in that** the water vapor permeability of the laminate (11) is, at 23°C and 85% air humidity over 24 hours, less than 220 g/m², preferably less than 100 g/m² and most preferably less than 15 g/m².

12. Container according to one of the preceding claims, **characterized in that** the container (23) has a bottom on which the laminate (11) is deformed in such a manner that at least a reinforcing rib is formed on the bottom (32) and/or the laminate (11) is deformed in such a manner that the container (23) has a multitude of hollows for receiving food.

13. Method for producing an inherently stable container (23) from a laminate (11) according to one of the preceding claims, **characterized in that** the laminate (11) that has an elongation at rupture of at least 12% in the processing direction as well as in the transverse direction is formed to the container (23) in a deep drawing process and a first and/or a second carrier layer (13, 15) made of cardboard or paper are deformed beyond their elastic limit and are thus fold-free elongated to the container (23).

## Revendications

1. Récipient (23) pour conserver des aliments avec un bord de scellement (25) qui présente une surface de scellement (27), lequel récipient (23) est exempt de suremballages supplémentaires pour la stabilisation et sur lequel un couvercle (35) ou une feuille peut être montée pour sceller le récipient (23), formé d'un laminé (11) comprenant :
- une première couche porteuse (15) en carton, fabriquée en pulpe broyée mécaniquement, en un papier en une ou plusieurs couches ou en cellulose,
- une couche barrière (17) en un matériau résistant à la graisse, à l'eau et à la chaleur, sur le côté tourné vers l'aliment à conserver,
- un premier adhésif (21) pour la liaison de la couche porteuse (15) et de la couche barrière (17), cependant que la couche porteuse (15), l'adhésif (21) et la couche barrière (17) sont de qualité alimentaire ,
- une seconde couche porteuse (13) en carton ou en papier, fabriquée en pulpe broyée mécaniquement, en un papier en une ou plusieurs couches ou en cellulose et
- un second adhésif (19) pour la liaison de la première et de la seconde couche porteuse (13, 15), cependant que
- le récipient est compostable et/ou biodégradable selon la norme européenne EN 13432,
**caractérisé en ce**
- **que** la perméabilité à l'oxygène du laminé (11) à 23°C et 0% d'humidité de l'air pendant 24 heures est inférieure à 1500 cm³/m².24h.bar, de préférence inférieure à 15 cm³/m².24h.bar et de manière particulièrement préférée inférieure à 3 cm³/m².24h.bar,
- **que** le laminé (11) présente une élongation à la rupture d'au moins 12% aussi bien dans le sens de traitement que dans le sens transversal et
- **qu'**au moins le bord de scellement (25) du récipient ou la surface de scellement (27) du bord de scellement (25) est exempte de plis.

2. Récipient selon la revendication 1, **caractérisé en ce que** la première couche porteuse (15) est fabriquée en un papier qui présente un grammage d'au moins 90 g/m² et une élongation à la rupture d'au moins 7,5% dans le sens de traitement et d'au moins 6,5% dans le sens transversal et que la seconde couche porteuse (13) est fabriquée en un papier qui présente un grammage d'au moins 90 g/m² et une élongation à la rupture d'au moins 7,5% dans le sens de traitement et d'au moins 6,5% dans le sens transversal.

3. Récipient selon l'une des revendications précédentes, **caractérisé en ce que** le premier adhésif (21) et/ou le second adhésif (19) est à base de copolymère vinylique ou de de copolymère de l'éthylène de vinyle.

4. Récipient selon l'une des revendications précédentes, **caractérisé en ce que** le premier adhésif (21) et/ou le second adhésif (19) est une feuille extrudée de biopolymère compostable avec une masse surfacique d'au moins 10g/m².

5. Récipient selon l'une des revendications précédentes, **caractérisé en ce que** le la couche barrière (17) est une feuille d'hydrate de cellulose qui est pourvue, au moins sur le côté tourné vers ou opposé à l'aliment à conserver, d'une première enduction pare-vapeur.

6. Récipient selon l'une des revendications 1 à 4, **caractérisé en ce que** la couche barrière (17) est un biopolymère extrudé ou laminé compostable qui agit comme premier adhésif (21).

7. Récipient selon l'une des revendications précédentes, **caractérisé en ce que** la couche barrière (17) est une feuille extrudée en biopolymère compostable qui agit comme premier adhésif (21) ou une couleur d'enduction de base aqueuse, la couche barrière ayant une masse surfacique d'au moins 12 g/m².

8. Récipient selon l'une des revendications précédentes, **caractérisé en ce que** la couche barrière (17) est thermoscellable ou scellable à froid.

9. Récipient selon l'une des revendications précédentes, **caractérisé en ce que** le bord ouvert (31) du bord de scellement (25) est un bord rabattu (29) tout autour.

10. Récipient selon la revendication 9, **caractérisé en ce que** le bord ouvert (31) du bord de scellement (25) est enroulé vers le haut de telle manière que le bord ouvert (31) se trouve à l'intérieur du bord rabattu (29) et qu'une autre surface de scellement (33) est formée sur le bord rabattu (29).

11. Récipient selon l'une des revendications précédentes, **caractérisé en ce que** la perméabilité à la vapeur d'eau du laminé (11) est, à 23°C et pour 85% d'humidité de l'air pendant 24 heures, inférieure à 220 g/m², de préférence inférieure à 100 g/m² et de manière particulièrement préférée inférieure à 15 g/m².

12. Récipient selon l'une des revendications précédentes, **caractérisé en ce que** le récipient (23) présente un fond (32) sur lequel le laminé (11) est déformé de telle manière qu'au moins une nervure de renforcement est formée sur le fond (32) et/ou le laminé (11) est déformé de telle manière que le récipient (23) présente une multitude de renfoncements pour recevoir des aliments.

13. Procédé pour la fabrication d'un récipient à stabilité intrinsèque à partir d'un laminé (11) selon l'une des revendications précédentes, **caractérisé en ce que** le laminé (11) qui présente une élongation à la rupture d'au moins 12% aussi bien dans le sens de traitement que dans le sens transversal est formé en récipient (23) dans un procédé d'emboutissage profond et qu'une première et/ou une deuxième couche porteuse (13, 15) en carton ou en papier sont déformées au-delà de leur limite d'élasticité et peuvent ainsi être étirées sans plis en récipient (23).
